# EUROPÄISCHE PATENTANMELDUNG

(11) **EP 3 425 465 A1**
(43) Veröffentlichungstag der Anmeldung: **09.01.2019**
(21) Anmeldenummer: 18180321.4
(22) Anmeldetag: 28.06.2018
(51) Int. Cl.: G05B 19/418, H04L 12/28, H04W 84/18, F24F 11/30, H04W 4/38

(54) **REGELUNGSSYSTEM ZUR VERTEILUNG DER HEIZ- UND/ODER KÜHLLEISTUNG EINES HEIZ- UND/ODER KÜHLSYSTEMS**

(30) Priorität: 04.07.2017 DE 202017103975 U
(71) Anmelder: REHAU AG + Co, 95111 Rehau (DE)
(72) Erfinder: Kröber, Carsten, 90768 Fürth (DE); Pommer, Willi, 90427 Nürnberg (DE); Gottschalk, Rene, 90562 Heroldsberg (DE)

(57) **Zusammenfassung**

Die vorliegende Erfindung bezieht sich auf ein Regelungssystem (1) zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, wobei das Regelungssystem (1) eine zentrale Regelungseinheit (2) und mehrere dezentrale Raumgeräte (4, 4', 4 ") umfasst, wobei die dezentralen Raumgeräte (4, 4', 4") zur Übermittlung von Regelungssignalen, Sensorwerten, Zustandssignalen und/oder durch den Nutzer eingegebenen Informationen mit der zentralen Regelungseinheit (2) verbunden sind und wobei die zentrale Regelungseinheit (2) sowohl zur kabelgebundenen Anbindung mindestens eines der dezentralen Raumgeräte (4, 4', 4") als auch zur Anbindung mindestens eines der dezentralen Raumgeräte (4, 4', 4") per Funk eingerichtet ist.

## Beschreibung

Die vorliegende Erfindung betrifft ein Regelungssystem zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, das eine zentrale Regelungseinheit und mehrere dezentrale Raumgeräte zur Übermittlung von Sensorwerten, Zustandssignalen und/oder durch den Nutzer eingegebenen Informationen umfasst, welche mit der zentralen Regelungseinheit verbunden sind.

Derartige Regelungssysteme zur Verteilung der Heiz- und/oder Kühlleistung eines Heiz- und/oder Kühlsystems sind aus dem Stand der Technik bekannt, beispielsweise aus der DE 10 2013 101 568 A1. In der Praxis übliche Regelungssysteme für Heiz- und/oder Kühlsysteme, insbesondere Flächenheizungs- und/oder -kühlungssysteme sind entweder aus Verdrahtungseinheiten, an denen Raumtemperaturregler angeschlossen sind, oder aus zentralen Regelungseinheiten, die mit Raumgeräten (beispielsweise Raumtemperaturfühler, Luftfeuchtigkeitsmesser, Anwesenheitserkennungseinrichtungen, Heizkörperreglern und dergleichen sowie aus Kombinationen dieser Funktionen mit Möglichkeiten der Eingabe von Vorgaben durch den Nutzer sowie Möglichkeiten der Ausgabe von Informationen an den Nutzer) entweder über einen kabelgebundenen (Bustechnologie) oder einen drahtlosen Kommunikationskanal (Funktechnologie) verbunden sind, aufgebaut.

Allgemein wird ein Kommunikationskanal, über den mehrere Teilnehmer miteinander kommunizieren können, als Bussystem oder Bus bezeichnet. Dieser Begriff wird im Besonderen nur für einen Kommunikationskanal verwendet, bei dem zum Nachrichtenaustausch ein Kabel oder eine andere elektrische Verbindung verwendet wird. Im Folgenden wird dieses kabelgebundene Kommunikationssystem als Bussystem oder kurz als Bus bezeichnet; das für die Buskommunikation verwendete Kabel als Buskabel; die in einem Gerät integrierte Einheit zur Kommunikation über das Bussystem als Busschnittstelle. Die Verwendung eines Bussystems verringert durch die gemeinsame Verwendung einer Leitung für mehrere Teilnehmer den Verkabelungsaufwand der für den Aufbau eines Regelungssystems erforderlich ist.

Ein auf Funktechnik basierender Kommunikationskanal, der ebenfalls den Nachrichtenaustausch zwischen mehreren Teilnehmern ermöglicht, wird im Folgenden als Funksystem bezeichnet, die in einem Gerät integrierte Einheit zur Kommunikation über das Funksystem als Funkschnittstelle.

Die zentralen Regelungseinheiten können wiederum mit Ergänzungseinheiten, die zur Erweiterung der Anzahl der angeschlossenen Raumgeräte oder zur Erweiterung der Funktionen (beispielsweise zur Regelung der Heiz- oder Kühlmitteltemperatur, Steuerung der zur Versorgung dienenden Pumpen, Ansteuerung von Geräten zur Ent- oder Befeuchtung, der Luftbehandlung oder des Luftaustauschs sowie weiterer Funktionen) dienen, entweder über einen Bus oder ein Funksystem verbunden werden. Nachteilig daran wird gesehen, dass bestimmte Komponenten, auch im Falle einer Nachrüstung solcher Komponenten, generell nicht an ein Bussystem angeschlossen werden können oder ein Buskabel an dieser Stelle nicht vorhanden ist. Beispielsweise sind bestimmte Komponenten, wie zum Beispiel Heizkörperregler, Anwesenheitsmelder oder Fensterkontakte, nur in einer Funk-Variante verfügbar und können somit mit zentralen Regelungseinheiten und Ergänzungseinheiten, die lediglich eine Busschnittstelle besitzen, nicht verbunden werden. Gleichermaßen werden andere Komponenten, wie zum Beispiel spezielle Raumbediengeräte, in bestimmten Anwendungsfällen nur in einer Bus-Variante verwendet, womit sie nicht an zentralen Regelungseinheiten und Ergänzungseinheiten, die lediglich über ein Funksystem verfügen, angeschlossen werden können.

Um diesen Nachteil zu überwinden, sind auch Lösungen bekannt, bei denen durch Ergänzungseinheiten, die mit den auf der Bus-Technologie basierenden zentralen Regelungseinheiten verbunden werden, die Funktion eines Funksystems zusätzlich erzeugt wird. Dies hat aber den Nachteil, dass eine weitere Systemkomponente entweder bereits von Anfang an zusätzlich oder im Nachrüstfall nachträglich an die Systemeinheiten angebaut werden muss. Diese Zusatzeinheit ist aufgrund der Notwendigkeit einer geeigneten Verbindungs- und Befestigungstechnik, beispielsweise zur Wandbefestigung, sowie eines entsprechenden Gehäuses aufwendig gestaltet und erfordert damit zusätzlichen Platzbedarf und verursacht weitere Kosten sowie einen erhöhten Installations- und Inbetriebssetzungsaufwand.

An dieser Stelle setzt die vorliegende Erfindung ein, der die Aufgabe zugrunde liegt, ein Regelungssystem zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten zur Verfügung zu stellen, das die Nachteile des Stands der Technik überwindet. Insbesondere soll das erfindungsgemäße Regelungssystem eine einfache Integration von zusätzlichen funkbasierten Systemkomponenten ermöglichen und gleichzeitig eine kompaktere Bauweise gegenüber einer Lösung aus Einzelkomponenten erlauben. Darüber hinaus soll das erfindungsgemäße Regelungssystem einen verringerten Planungsaufwand mit sich bringen, eine reduzierte Lagerhaltung ermöglichen und den Installations- und Inbetriebsetzungsaufwand bei Auf- und/oder Nachrüstung der Bus-Lösung reduzieren.

Diese und andere Aufgaben werden durch ein Regelungssystem mit den Merkmalen des Anspruches 1 gelöst. Vorteilhafte Ausführungsformen der vorliegenden Erfindung sind in den abhängigen Ansprüchen beschrieben.

Gemäß der vorliegenden Erfindung wurde erkannt, dass eine einfache Integration von zusätzlichen, insbesondere funkbasierten Systemkomponenten bei gleichzeitigem Erreichen einer kompakteren Bauweise dadurch ermöglicht wird, dass die zentrale Regelungseinheit des erfindungsgemäßen Regelungssystems mit der kombinierten Kommunikationstechnik ausgestattet ist, andere Komponenten des Regelungssystems also sowohl über Bus als auch per Funk mit der zentralen Regelungseinheit verbunden werden können. Bei Verwendung einer derartigen zentralen Regelungseinheit können sämtliche Systemkomponenten mit der zentralen Regelungseinheit kommunizieren, unabhängig davon, ob sie auf Bus-Technologie oder Funk-Technologie basieren. Diese Anschlussvarianten ermöglichen es, im Aufbau des erfindungsgemäßen Regelungssystems auf den Einsatz einer Ergänzungseinheit zum Anschluss von funkbasierten Systemkomponenten bei einer busbasierten zentralen Regelungseinheit zu verzichten, was den Aufbau des erfindungsgemäßen Regelungssystems vereinfacht. Darüber hinaus wird der Installations- und Inbetriebssetzungsaufwand für das Regelungssystem sowohl bei der Aufrüstung einer bestehenden Anlage als auch bei der Nachrüstung des Regelungssystems wie auch die Lagerhaltung des Installateurs bzgl. der Systemkomponenten reduziert.

Dementsprechend liegt die vorliegende Erfindung in der Bereitstellung eines Regelungssystems zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, umfassend eine zentrale Regelungseinheit und mehrere dezentrale Raumgeräte, wobei die dezentralen Raumgeräte zur Übermittlung von Regelungssignalen, Sensorwerten, Zustandssignalen und/oder durch den Nutzer eingegebenen Informationen mit der zentralen Regelungseinheit verbunden sind, wobei das Regelungssystem erfindungsgemäß dadurch gekennzeichnet ist, dass die zentrale Regelungseinheit sowohl zur kabelgebundenen, insbesondere bus-basierten, Anbindung mindestens eines der dezentralen Raumgeräte als auch zur Anbindung mindestens eines der dezentralen Raumgeräte per Funk eingerichtet ist.

Wie hierin verwendet ist unter einem "Bussystem" oder "Bus" ein Kommunikationskanal zu verstehen, über den mehrere Teilnehmer miteinander kommunizieren können. Dabei ist der Kommunikationskanal auf solche beschränkt, bei denen zum Nachrichtenaustausch ein Kabel oder eine andere elektrische Verbindung verwendet wird. Daher wird in dieser Anmeldung ein kabelgebundenes Kommunikationssystem als Bussystem oder kurz als Bus bezeichnet; das für die Buskommunikation verwendete Kabel als Buskabel; die in einem Gerät integrierte Einheit zur Kommunikation über das Bussystem als Busschnittstelle. Im Gegensatz dazu wird ein auf Funktechnik basierender Kommunikationskanal, der ebenfalls den Nachrichtenaustausch zwischen mehreren Teilnehmern ermöglicht, hierin als Funksystem bezeichnet, die die in einem Gerät integrierte Einheit zur Kommunikation über das Funksystem als Funkschnittstelle.

Vorzugsweise handelt es sich bei dem Heiz- und/oder Kühlsystem, dessen Regelung durch das erfindungsgemäße Regelungssystem erfolgt, um eine Flächenheizung/-kühlung, in bestimmten Anwendungen ergänzt um Geräte für die Luftbehandlung oder den Luftaustausch, insbesondere eine Fußbodenheizung/-kühlung, oder ein Heizungssystem mit Heizkörpern. In einem solchen System wird ein Temperiermedium Heizkreisen zum Kühlen/Heizen zugeführt. Fußbodenheizung/-kühlung bedeutet, dass die Heizschleifen/Heizkreise beispielsweise im Estrich unter dem Fußboden verlaufen. Die Heizschleifen können auch in einer anderen geeigneten Struktur installiert sein. So können die Heizschleifen auch in der Wand oder Decke installiert sein.

Es kann auch von Nutzen sein, wenn die kabelgebundene Anbindung als ein elektrisches und/oder elektronisches Bussystem zur Kommunikation und/oder Datenverteilung ausgebildet ist. Dadurch können Mehrfachverkabelungen vermieden werden.

Es kann auch von Nutzen sein, wenn das erfindungsgemäße Regelungssystem ferner mindestens eine mit der zentralen Regelungseinheit verbundene Erweiterungseinheit umfasst, die sowohl zur busbasierten Anbindung mindestens eines weiteren dezentralen Raumgeräts als auch zur Anbindung mindestens eines weiteren dezentralen Raumgeräts per Funk eingerichtet ist. Dadurch wird der flexible Anschluss weiterer Systemkomponenten an das erfindungsgemäße Regelungssystem ermöglicht. Die Verbindung zwischen der zentralen Regelungseinheit und der Erweiterungseinheit kann dabei busbasiert und/oder per Funk ausgebildet sein.

Das erfindungsgemäße Regelungssystem, das Heiz- und/oder Kühlsystem, dessen Regelung durch das erfindungsgemäße Regelungssystem erfolgt, sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Die vorliegende Erfindung wird im Folgenden unter Bezugnahme auf bevorzugte Ausführungsformen des erfindungsgemäßen Regelungssystems im Detail beschrieben, wobei die beigefügten Zeichnungen die Erfindung leichter verständlich machen sollen. Dabei versteht es sich, dass die dargestellten Ausführungsformen die vorliegende Erfindung exemplarisch veranschaulichen und nicht einschränken sollen. Es zeigen:
- Fig. 1: eine schematische Darstellung eines busbasierten Regelungssystems zur Verteilung der Heiz- und/oder Kühlleistung eines Heiz- und/oder Kühlsystems nach dem Stand der Technik;
- Fig. 2: eine schematische Darstellung eines weiteren, funkbasierten Regelungssystems zur Verteilung der Heiz- und/oder Kühlleistung eines Heiz- und/oder Kühlsystems nach dem Stand der Technik;
- Fig. 3: eine schematische Darstellung eines busbasierten Regelungssystems zur Verteilung der Heiz- und/oder Kühlleistung eines Heiz- und/oder Kühlsystems unter Verwendung von busbasierten Erweiterungseinheiten nach dem Stand der Technik;
- Fig. 4: eine schematische Darstellung eines weiteren, funkbasierten Regelungssystems zur Verteilung der Heiz- und/oder Kühlleistung eines Heiz- und/oder Kühlsystems unter Verwendung von busbasierten Erweiterungseinheiten nach dem Stand der Technik;
- Fig. 5: eine schematische Darstellung eines Regelungssystems zur Verteilung der Heiz- und/oder Kühlleistung eines Heiz- und/oder Kühlsystems gemäß einer Ausführungsform der vorliegenden Erfindung; und
- Fig. 6: eine schematische Darstellung eines Regelungssystems zur Verteilung der Heiz- und/oder Kühlleistung eines Heiz- und/oder Kühlsystems gemäß einer weiteren Ausführungsform der vorliegenden Erfindung.

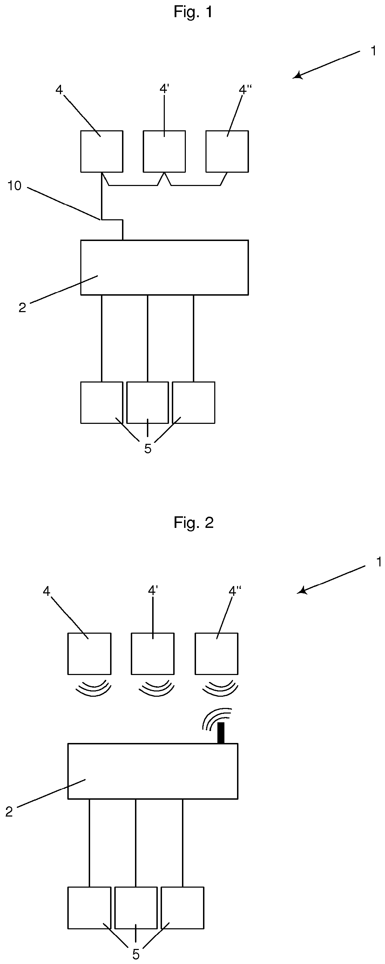

In Fig. 1 ist ein Regelungssystem 1 zur Verteilung der Heiz- und/oder Kühlleistung eines Heiz- und/oder Kühlsystems, insbesondere einer Fußbodenheizung, nach dem Stand der Technik schematisch dargestellt.

In der in Fig. 1 dargestellten Ausführungsform umfasst das Regelungssystem 1 eine zentrale Regelungseinheit 2. Mit der zentralen Regelungseinheit 2 sind über eine Bus-Verbindung 10 drei dezentrale Raumeingabe- und/oder Raumdetektionsgeräte 4, 4', 4" verbunden. Mit der zentralen Regelungseinheit 2 sind weitere Vorrichtungen 5, wie beispielsweise Stellantriebe für Ventile der Heizkreise, Pumpen und dergleichen, verbunden.

In der In Fig. 2 dargestellten Ausführungsform umfasst das Regelungssystem 1 eine zentrale Regelungseinheit 2. Mit der zentralen Regelungseinheit 2 sind über eine FunkVerbindung drei dezentrale Raumeingabe- und/oder Raumdetektionsgeräte 4, 4', 4" verbunden. Mit der zentralen Regelungseinheit 2 sind weitere Vorrichtungen 5, wie beispielsweise Stellantriebe für Ventile der Heizkreise, Pumpen und dergleichen, verbunden.

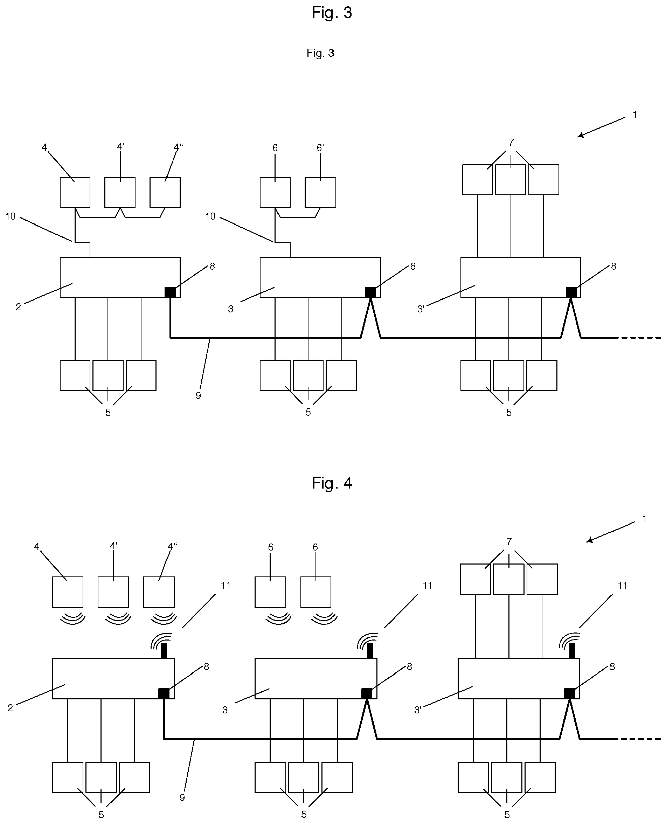

In der In Fig. 3 dargestellten Ausführungsform umfasst das Regelungssystem 1 eine zentrale Regelungseinheit 2 und zwei mit der zentralen Regelungseinheit 2 verbundene Erweiterungseinheiten 3, 3', wobei die Erweiterungseinheit 3' mittelbar über die Erweiterungseinheit 3 mit der zentralen Regelungseinheit 2 verbunden ist. Die Verbindung zwischen der zentralen Regelungseinheit 2 und der Erweiterungseinheit 3 sowie die Verbindung zwischen den beiden Erweiterungseinheiten 3, 3' ist kabelgebunden ausgebildet, insbesondere als Bus-Verbindung 9 unter Verwendung der Bus-Schnittstelle 8. Mit der zentralen Regelungseinheit 2 sind kabelgebunden wiederum über eine Bus-Verbindung 10 drei dezentrale Raumeingabe- und/oder Raumdetektionsgeräte 4, 4', 4" verbunden.

Bei den dezentralen Raumgeräten 4, 4', 4" kann es sich beispielsweise um Raumtemperaturregler, Raumtemperaturfühler, Luftqualitäts- und Luftfeuchtigkeitsmesser handeln, die über eine Busschnittstelle verfügen. An die zentrale Regelungseinheit 2 sind weitere Vorrichtungen 5 wie beispielsweise Stellantriebe für Ventile der Heizkreise, Pumpen und dergleichen gebunden. An die Erweiterungseinheit 3 sind wiederum kabelgebunden (Bus-Verbindung 10) zwei dezentrale Raumgeräte 6, 6' angebunden, bei denen es sich wiederum beispielsweise um Raumtemperaturregler, Raumtemperaturfühler, Luftqualitäts- und Luftfeuchtigkeitsmesser handeln, die über eine Busschnittstelle verfügen. Auch mit der Erweiterungseinheit 3 sind bevorzugt über eine Kabelverbindung weitere Vorrichtungen 5, wie beispielsweise Stellantriebe für Ventile der Heizkreise, Pumpen und dergleichen, verbunden.

Neben derartigen weiteren Vorrichtungen 5, wie beispielsweise Stellantrieben für Ventile der Heizkreise, und Pumpen, sind an die Erweiterungseinheit 3' auch weitere Komponenten 7 angeschlossen. Die Verbindung der weiteren Vorrichtungen 5 und der weiteren Komponenten 7 mit der Erweiterungseinheit 3' erfolgt wiederum kabelgebunden.

Über die Bus-Schnittstelle 8 können zusätzliche weitere Erweiterungseinheiten beispielsweise an die Erweiterungseinheit 3' angeschlossen werden. Über die Bus-Verbindung erfolgt eine Kommunikation auch mit der zentralen Regelungseinheit 2.

Bei dieser Konfiguration ist ein Anschließen von dezentralen Raumgeräten, die jeweils nur über eine Funkschnittstelle verfügen, nicht möglich.

Das Regelungssystem 1 kann beispielsweise zur Regelung einer Fußbodenheizung herangezogen werden. Bei einer derartigen Fußbodenheizung wird ein Temperiermedium (z.B. Wasser oder ein Wasser/Glycol-Gemisch) entlang einer Vorlaufleitung, in der in der Regel ein Vorlauf-Temperaturfühler angeordnet ist, zu einem Vorlauf-Heizkreisverteiler geführt, der das Temperiermedium auf mehrere Heizkreise verteilt. Die Heizkreise führen das Temperiermedium durch die Flächen, durch die der betreffende Raum beheizt oder gekühlt werden soll. Jeder Heizkreis verfügt über ein Ventil mit einem Stellantrieb, durch den der Durchfluss durch den jeweiligen Heizkreis geregelt wird. Beim Durchströmen der Heizkreise gibt das Temperiermedium Wärmeenergie an einen Verbraucher (beispielsweise der Estrich des zu beheizenden oder zu kühlenden Raums) ab. Die Heizkreise münden in einen Rücklauf-Heizkreisverteiler, von dem das Temperiermedium in eine Rücklaufleitung fließt, durch die es zurück zu einem Temperierelement zur Erwärmung des Temperiermediums (z. B. eine Wärmepumpe oder eine Brennwerttherme) geleitet wird.

Fig. 4 zeigt ein weiteres Regelungssystem 1 zur Verteilung der Heiz- und/oder Kühlleistung eines Heiz- und/oder Kühlsystems, insbesondere einer Fußbodenheizung, nach dem Stand der Technik. Das in Fig. 2 dargestellte Regelungssystem 1 unterscheidet sich von der in Fig. 1 dargestellten Ausführungsform dahingehend, dass die zentrale Regelungseinheit 2 und die Erweiterungseinheit 3' lediglich über eine Funkschnittstelle für die dezentralen Raumgeräte verfügen. Damit sind an die zentrale Regelungseinheit 2 ausschließlich dezentrale Raumgeräte 4, 4', 4"und an die Erweiterungseinheit 3 ausschließlich dezentrale Raumgeräte 6, 6' angeschlossen, die jeweils über eine Funkschnittstelle verfügen. Bei dieser Konfiguration ist ein Anschließen von dezentralen Raumgeräten, die jeweils nur über eine Busschnittstelle verfügen, nicht möglich.

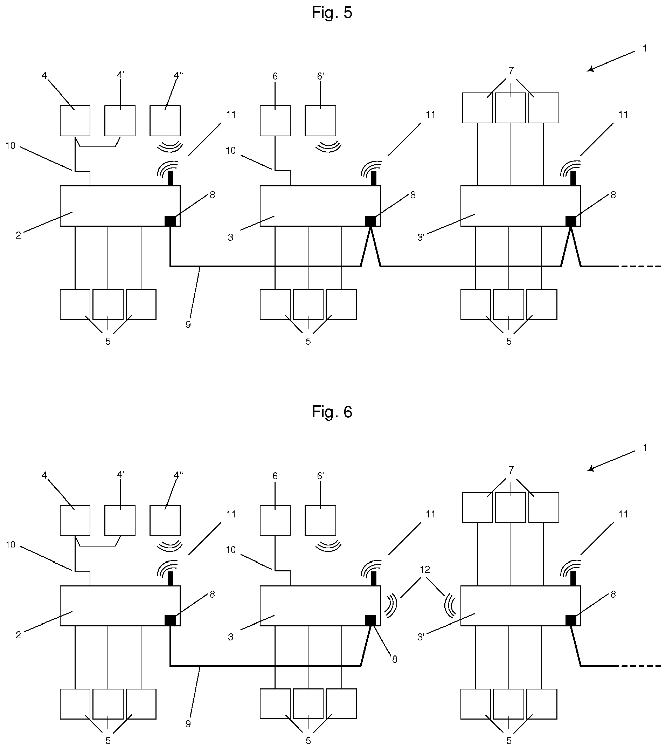

Eine Ausführungsform eines erfindungsgemäßen Regelungssystem 1 zur Verteilung der Heiz- und/oder Kühlleistung eines Heiz- und/oder Kühlsystems, insbesondere einer Fußbodenheizung, zeigt Fig. 5 in einer schematischen Darstellung. In der In Fig. 5 gezeigten Ausführungsform umfasst das erfindungsgemäße Regelungssystem 1 eine zentrale Regelungseinheit 2 und zwei mit der zentralen Regelungseinheit 2 verbundene Erweiterungseinheiten 3, 3', wobei die Erweiterungseinheit 3' mittelbar über die Erweiterungseinheit 3 mit der zentralen Regelungseinheit 2 verbunden ist. Die Verbindung zwischen der zentralen Regelungseinheit 2 und der Erweiterungseinheit 3 sowie die Verbindung zwischen den beiden Erweiterungseinheiten 3, 3' ist kabelgebunden ausgebildet, insbesondere als Bus-Verbindung 9 unter Verwendung der Busschnittstellen 8.

Mit der zentralen Regelungseinheit 2 sind zum einen kabelgebunden über eine Bus-Verbindung 10 zwei Raumgeräte 4, 4' verbunden, zum anderen über eine Funkschnittstelle ein dezentrales Raumgerät 4". Ebenfalls kabelgebunden sind weitere Vorrichtungen 5 wie beispielsweise Stellantriebe für Ventile der Heizkreise, Pumpen und dergleichen an die zentrale Regelungseinheit 2 gebunden.

Mit der Erweiterungseinheit 3 ist wiederum über ein Bussystem ein Raumgerät 6 verbunden, bei dem es sich wiederum beispielsweise um Raumregler, Raumtemperaturfühler und Luftfeuchtigkeitsmesser, die über eine Busschnittstelle verfügen, handeln kann. Ein weiteres dezentrales Raumgerät 6' ist über eine Funkverbindung mit der Erweiterungseinheit 3 verbunden. Darüber hinaus sind mit der Erweiterungseinheit 3 kabelgebunden weitere Vorrichtungen 5, wie beispielsweise Stellantriebe für Ventile der Heizkreise, Pumpen und dergleichen, verbunden.

Neben derartigen weiteren Vorrichtungen 5, wie beispielsweise Stellantriebe für Ventile der Heizkreise, und Pumpen, sind an die Erweiterungseinheit 3' auch weitere Komponenten 7 angeschlossen. Die Verbindung der weiteren Vorrichtungen 5 und der weiteren Komponenten 7 mit der Erweiterungseinheit 3' erfolgt wiederum kabelgebunden.

Bei den dezentralen Raumgeräten 4, 4', 6, die kabelgebunden mit der zentralen Regelungseinheit 2 bzw. Erweiterungseinheit 3 verbunden sind, kann es sich beispielsweise um Raumregler, Raumtemperaturfühler und Luftfeuchtigkeitsmesser handeln, die über einen kabelgebundenen Bus-Kommunikationskanal verfügen, während es sich bei den dezentralen Raumgeräten 4" und 6', die per Funk an die zentrale Regelungseinheit 2 bzw. die Erweiterungseinheit 3, angebunden sind, bevorzugt um bestimmte Komponenten handelt, die nur über eine Funkschnittstelle verfügen, wie zum Beispiel entsprechende Heizkörperregler, Anwesenheitsmelder oder Fensterkontakte.

Bei dieser Konfiguration können sowohl an die zentrale Regelungseinheit 2 als auch an die Erweiterungseinheit 3 dezentrale Raumgeräte 4, 4', 4", 6, 6' angeschlossen werden, die jeweils ausschließlich einen Funk-Kommunikationskanal oder eine Busschnittstelle aufweisen. Auf diese Weise wird der Arbeitsaufwand für den Installateur bei der Installation des erfindungsgemäßen Regelungssystems 1 sowohl bei der Aufrüstung einer bestehenden Anlage als auch bei Nachrüstung des Regelungssystems 1 wie auch die Lagerhaltung des Installateurs bzgl. des Vorhaltens entsprechender Komponenten erheblich verringert.

Über die Bus-Schnittstelle 8 können zusätzliche weitere Erweiterungseinheiten beispielsweise an die Erweiterungseinheit 3' angeschlossen werden.

Das erfindungsgemäße Regelungssystem 1 nach der in Fig. 5 gezeigten Ausführungsform kann beispielsweise ebenfalls zur Regelung einer Fußbodenheizung eingesetzt werden. Für den Aufbau und die Funktionen dieser Fußbodenheizung mit dem erfindungsgemäßen Regelungssystem 1 gelten die Ausführungen zu Fig. 3 entsprechend.

Eine weitere Ausführungsform des erfindungsgemäßen Regelungssystems 1 zur Verteilung der Heiz- und/oder Kühlleistung eines Heiz- und/oder Kühlsystems, insbesondere einer Fußbodenheizung, ist schematisch in Fig. 6 dargestellt. Das in Fig. 6 dargestellte erfindungsgemäße Regelungssystem 1 unterscheidet sich von der in Fig. 5 dargestellten Ausführungsform dahingehend, dass die zentrale Regelungseinheit 2 und die Erweiterungseinheiten 3, 3' nicht nur über eine Busschnittstelle 8 für die Verwendung einer kabelgebundenen Bus-Verbindung, sondern auch über eine Funkschnittstelle zur Verbindung zwischen den Regelungseinheiten, also der zentralen Regelungseinheit und den Erweiterungseinheiten, verfügen. Damit besteht die Möglichkeit je nach bestehender Anforderung die Verbindung zwischen der zentralen Regelungseinheit 2 und den Erweiterungseinheiten 3, 3' sowie weiteren Erweiterungseinheiten wahlweise als Funkverbindung 12 oder als kabelgebundene Busverbindung auszuführen.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den Ansprüchen ergibt.

## Patentansprüche

1. Regelungssystem (1) zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, umfassend eine zentrale Regelungseinheit (2) und mehrere dezentrale Raumgeräte (4, 4', 4"), wobei die dezentralen Raumgeräte (4, 4', 4") zur Übermittlung von Regelungssignalen, Sensorwerten, Zustandssignalen und/oder durch den Nutzer eingegebenen Informationen mit der zentralen Regelungseinheit (2) verbunden sind,
**dadurch gekennzeichnet, dass**
die zentrale Regelungseinheit (2) sowohl zur kabelgebundenen Anbindung mindestens eines der dezentralen Raumgeräte (4, 4', 4") als auch zur Anbindung mindestens eines der dezentralen Raumgeräte (4, 4', 4") per Funk eingerichtet ist.

2. Regelungssystem (1) gemäß Anspruch 1, **dadurch gekennzeichnet, dass** die kabelgebundene Anbindung als ein elektronisches Bussystem zur Kommunikation und/oder Datenverteilung ausgebildet ist.

3. Regelungssystem (1) gemäß Anspruch 1 oder Anspruch 2, **dadurch gekennzeichnet, dass** das Regelungssystem (1) ferner mindestens eine mit der zentralen Regelungseinheit (2) verbundene Erweiterungseinheit (3, 3') umfasst, die sowohl zur busbasierten Anbindung mindestens eines weiteren dezentralen Raumgeräts (6) als auch zur Anbindung mindestens eines weiteren dezentralen Raumgeräts (6') per Funk eingerichtet ist.

4. Regelungssystem (1) gemäß Anspruch 3, **dadurch gekennzeichnet, dass** die zentrale Regelungseinheit (2) und die Erweiterungseinheit/die Erweiterungseinheiten (3, 3') dazu eingerichtet sind, die Verbindung zwischen ihnen über ein Bussystem oder ein Funksystem (12) auszubilden.
